(19) **Europäisches Patentamt**

**European Patent Office**

**Office européen des brevets**

(11) **EP 1 001 604 B1**

(12) **EUROPEAN PATENT SPECIFICATION**

(45) Date of publication and mention
of the grant of the patent:
**28.04.2004 Bulletin 2004/18**

(51) Int Cl.7: **H04N 1/32**

(21) Application number: **99308831.9**

(22) Date of filing: **05.11.1999**

(54) **Embedding a watermark into a compressed image signal**

Einbettung eines Wasserzeichens in ein komprimiertes Bildsignal

Incrustation d'un filigrane dans un signal d'image comprimé

(84) Designated Contracting States:
**DE FR GB IT NL**

(30) Priority: **10.11.1998 JP 31942298**
**10.11.1998 JP 31942398**

(43) Date of publication of application:
**17.05.2000 Bulletin 2000/20**

(73) Proprietor: **CANON KABUSHIKI KAISHA**
**Tokyo (JP)**

(72) Inventors:
• **Iwamura, Keiichi**
**Shimomaruko, Ohta-ku, Tokyo (JP)**
• **Hayashi, Junichi**
**Shimomaruko, Ohta-ku, Tokyo (JP)**

(74) Representative:
**Beresford, Keith Denis Lewis et al**
**BERESFORD & Co.**
**16 High Holborn**
**London WC1V 6BX (GB)**

(56) References cited:
**EP-A- 0 766 468          EP-A- 0 860 793**

• **HARTUNG AND GIROD: "DIGITAL WATERMARKING OF RAW AND COMPRESSED VIDEO" , PROCEEDINGS OF THE SPIE,SPIE, BELLINGHAM, VA,US, VOL. 2952, PAGE(S) 205-213 XP002085796 * the whole document ***

## Description

The present invention relates to the embedding and extraction of watermark information in image data.

With the recent remarkable advances in computers and networks, so-called multimedia information such as character information, image information, and speech information is handled by computers through networks. Since image and speech data are relatively large in data amount, the data amount is reduced by coding/compressing the image and speech data. If image data is compressed, more image information can be transmitted through a network at high speed. As an image compression technique, commonly called JPEG (Joint Photographic Expert Groups) for compressing multilevel still images according to ITU-T recommendation T.81 is widely used. To attain high-efficiency compression, standardization of JPEG 2000 has been examined.

JPEG is basically a coding scheme that uses the discrete cosine transformation (DCT). As a JPEG 2000 scheme, a scheme that uses the discrete wavelet transformation (DWT) is promising. As shown in Fig. 1A, each of JPEG and JPEG 2000 coding apparatuses is generally comprised of a frequency converter 701 for calculating the discrete cosine transform and discrete wavelet transform, quantizer 702, entropy coder 703, and the like. As shown in Fig. 1B, each of JPEG and JPEG 2000 decompressing apparatuses is comprised of an entropy decoder 704, inverse quantizer 705, and inverse frequency converter 706.

Image and speech data used in a computer or network are digital data, and hence can be easily duplicated. This duplication causes no deterioration in data quality. For this reason, to protect the copyright on these pieces of multimedia information, copyright information is embedded as watermark information in image and speech data. By extracting the watermark information from the multimedia, the copyright information can be obtained, thus preventing unauthorized duplication of the data.

Examples of watermark embedding methods are a scheme adopted by Nippon Telephone Telegraph (NTT), which uses the discrete cosine transform, "Watermarking Scheme in Frequency Domain for Protecting Copyright of Digital Image" (Nakamura, Ogawa, and Takashima, SCIS'97-26A, January 1997), scheme adopted by Defense Academy, which uses the discrete Fourier transform, "Watermark Signature Method for Images based on PN Sequences" (Onishi, Oka, and Matsui, SCIS'97-26B, January 1997), and scheme adopted by Mitsubishi Corp. and Kyushu University, "Empirical Examination about Safety and Reliability of Watermarking Technique using Wavelet transform" (Ishizuka, Sakai, and Sakurai, SCIS'97-26D, January 1997.

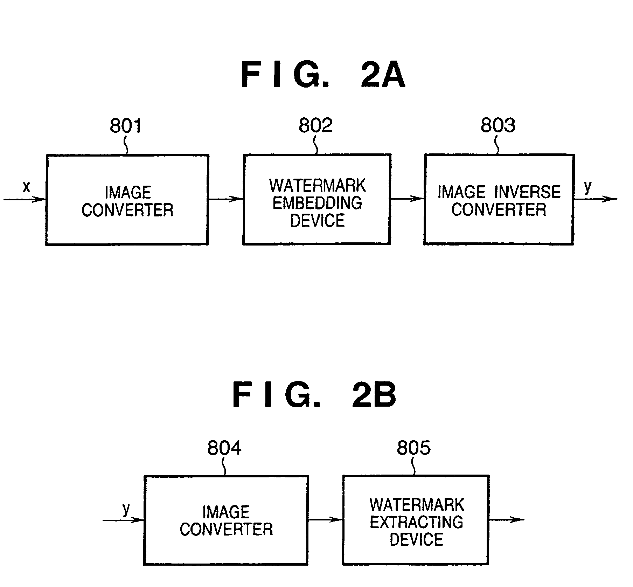

As shown in Fig. 2A, such a watermark embedding apparatus is comprised of a frequency converter 801 for calculating the discrete cosine transform or discrete wavelet transform, watermark embedding device 802 for quantizing the frequency components in accordance with information to be embedded, and inverse frequency converter 803. A watermark extracting unit is comprised of a frequency converter 804 and watermark extracting device 805 for extracting the information embedded in quantized frequency components, as shown in Fig. 2B.

When a watermark embedding process and compressing process are to be performed for image data, it is easy to compress the image data in which watermark information is embedded. It is, however, difficult to embed watermark information in compressed data. Since compressed data is entropy-coded data, it is difficult to directly embed watermark information in the coded data.

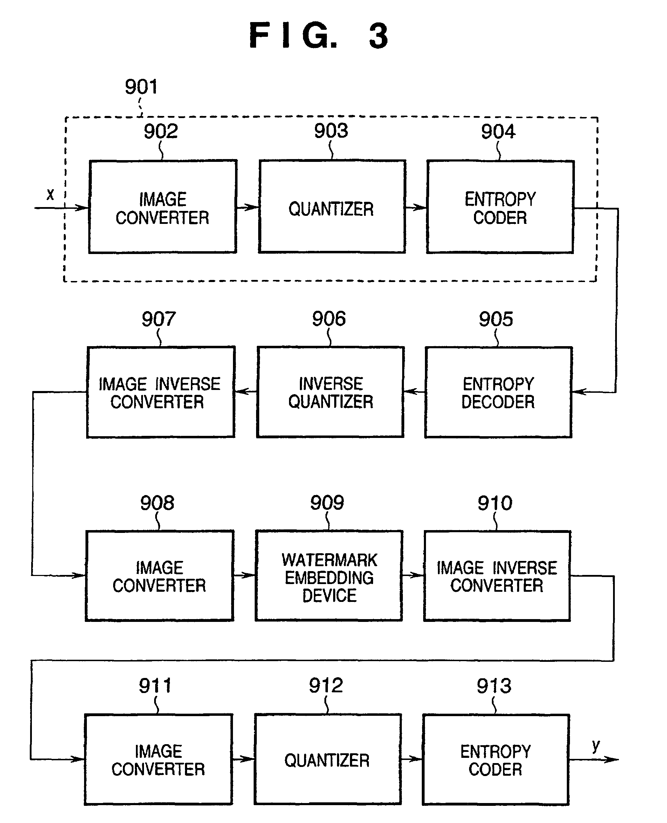

Watermark information is embedded in compressed data in the following manner. As shown in Fig. 3, image data x compressed by components ranging from an image converter 902 to an entropy coder 904 is decompressed to be temporarily restored to image data by components ranging from an entropy decoder 905 to an image inverse converter 907. Watermark information is embedded in the image data by components ranging from an image converter 908 to an image inverse converter 910. The resultant output is re-compressed by components ranging from an image converter 911 to an entropy coder 913.

In contrast to this, the output obtained by a watermark embedding process is image data itself, and hence can be directly input to a compressing process.

Various applications and apparatuses using coding schemes such as JPEG, e.g., digital cameras, color facsimile apparatuses, still image transfer systems, and still image processing systems, have been put into practice. Many of these applications and apparatuses use hardware such as Application Specific Integrated Circuits (ASICs) to code input images first, i.e., compress input images. If, therefore, these applications and apparatuses are designed to embed watermark information before a compressing/coding process, a great increase in cost is inevitable.

In addition, as sufficient studies have not been made to integrate a compressing/coding process and watermark embedding process in JPEG 2000 under examination, the problem of difficulty in embedding watermark information is likely to arise as in the case with JPEG.

"Digital Watermarking of Raw and Compressed Video" by Hartung and Girod in SPIE, Volume 2952, pages 205-213 discloses a scheme for watermarking of MPEG-2 encoded video. The watermark is embedded either into the uncoded video or into at least the DC coefficient of the partially decoded MPEG-2 bitstream which is partially re-encoded thereafter. The watermark can be retrieved from the decoded re-encoded video. The scheme working on encoded video is of much lower complexity than a complete decoding process followed by watermarking in the pixel domain and re-encoding.

EP-A-0766468 discloses digital watermarking of audio, image, video or multimedia data by inserting the watermark into the perpetually significant components of a decomposition of the data in a manner so as to be visually imperceptible. In a preferred method, a frequency spectral image of the data, preferably a Fourier transform of the data, is obtained. A watermark is inserted into perceptually significant components of the frequency spectral image. More specifically, identified highest magnitude coefficients, excluding the DC term, are used. The resultant watermarked spectral image is subjected to an inverse transform to produce watermarked data.

EP-A-0860793 discloses an apparatus for embedding watermark data according to the frequency-domain method into video data. A video data encoder for performing encoding of an original video data into a compressed data stream having a multi-layer structure comprises: means for transforming the original video data into a sequence of processing units of frequency domain data; means for embedding predetermined watermark data into at least one unit of the sequence of processing units; and means for generating the compressed data stream by processing the sequence of processing units.

The present invention provides an apparatus for embedding digital watermark data in encoded image data as set out in claim 1.

The present invention provides an apparatus for extracting digital watermark data from encoded image data as set out in claim 7.

The present invention also provides a method of embedding digital watermark data in encoded image data as set out in claim 8.

The present invention also provides a method of extracting digital watermark data from encoded image data as set out in claim 14.

The present invention also provides a storage medium storing a computer program as set out in claim 15.

The present invention also provides a signal carrying a computer program as set out in claim 16.

The present invention also provides a storage medium storing a computer program as set out in claim 17.

The present invention also provides a signal carrying a computer program as set out in claim 18.

BRIEF DESCRIPTION OF THE DRAWINGS

Fig. 1A is a block diagram for briefly describing an image coding apparatus;
Fig. 1B is a block diagram for briefly describing an image decoding apparatus;
Fig. 2A is a block diagram for briefly explaining a watermark embedding apparatus;
Fig. 2B is a block diagram for briefly explaining a watermark extracting apparatus;
Fig. 3 is a block diagram for briefly explaining an apparatus for embedding watermark information in compressed data;
Fig. 4 is a view showing a quantizing table;
Fig. 5 is a view explaining a zigzag scan;
Fig. 6 is a view showing a Huffman table;
Fig. 7 is a view for explaining the format of JPEG data;
Figs. 8A and 8B are block diagrams showing the arrangement of an image processing apparatus according to the first embodiment of the present invention;
Fig. 8C is a block diagram showing the arrangement of an image processing apparatus according to the second embodiment; and
Figs. 9A to 9C are block diagrams each showing the arrangement of an image processing apparatus according to the fourth embodiment.

Embodiments will be described in detail below relating to an information processing apparatus and method which protect rights such as a copyright, prevent unauthorized duplication and tampering of image data and record various information by embedding watermark information in image data.

In the following embodiments, the process of embedding watermark information in JPEG-coded compressed data and the process of extracting the embedded watermark information will be described. A JPEG compressing process, JPEG decompressing process, and watermark information embedding process will be briefly described first.

[JPEG Coding]

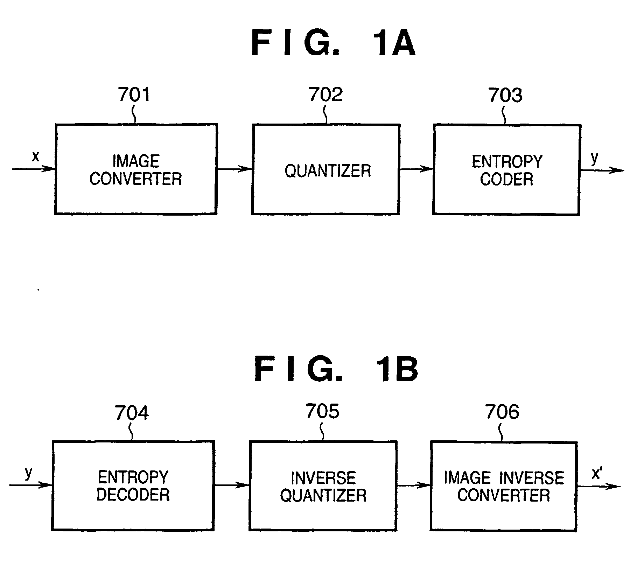

A JPEG compressing process will be briefly described with reference to Fig. 1A showing a JPEG coding process procedure.

First of all, an image converter 701 divides still image data to be coded into 8 x 8-pixel blocks, and performs the DCT (Discrete Cosine Transformation) in units of blocks. Each 8 x 8-pixel block having undergone the DCT will be referred as a "DCT coefficient block"; a coefficient contained in a DCT coefficient block, as a "DCT coefficient"; and a set of DCT coefficient blocks corresponding to one image, as a "DCT coefficient block group".

A quantizer 702 then quantizes a DCT coefficient block group by using an arbitrary quantizing table. A DCT coefficient block that is quantized will be referred to as a "quantized DCT coefficient block"; and a set of quantized DCT coefficient blocks corresponding to one image, as a "quantized DCT coefficient block group".

An entropy coder 703 Huffman-codes a quantized DCT coefficient block croup. This Huffman-coded data becomes JPEG data. The Huffman table used in this case may be a table prepared in advance or table generated for each image compressing process. The JPEG data includes the Huffman-coded data, quantizing table used for compression, and Huffman table.

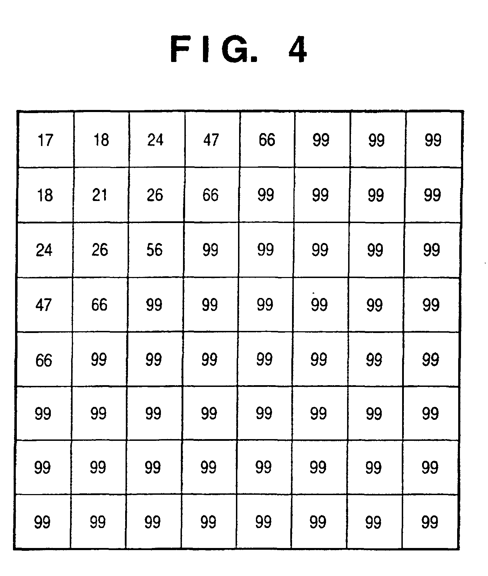

A quantized DCT coefficient block is obtained by dividing a DCT coefficient block by the value determined by a quantizing table. For example, a quantizing table for color difference components is provided for a 8 x 8 DCT coefficient block, as shown in Fig. 4. This quantizing table is designed to assign more bits to low-frequency components and fewer bits to high-frequency components. If, therefore, a DCT coefficient is -36 and the corresponding value in the quantizing table is 18, the quantized DCT coefficient is - 2. If the corresponding value in the quantizing table is 99, the quantized DCT coefficient is 0.

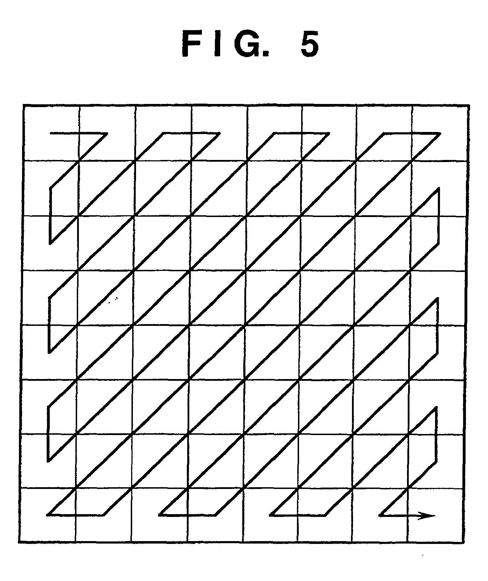

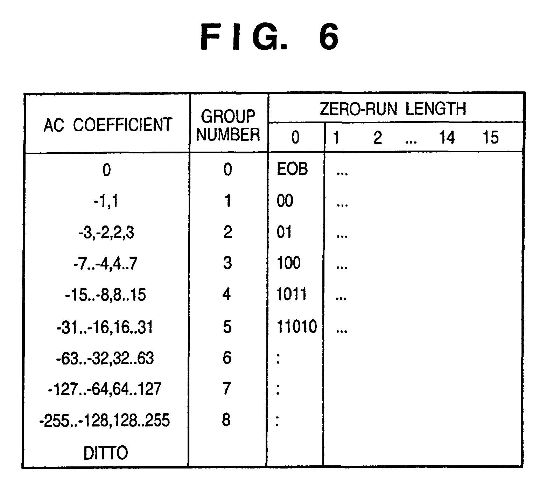

The DC and AC coefficients of the quantized DCT coefficients contained in a quantized DCT coefficient block are separately Huffman-encoded. Each DC correction coefficient is transformed into a difference between itself and the DC coefficient of the immediately preceding quantized DCT coefficient block and coded by using a table for DC coefficients. The AC coefficients are rearranged in a zigzag scan order like the one shown in Fig. 5, and are coded by using a table having a combination of runs of successive zero coefficients (zero run lengths) and coefficient values other than zero. Fig. 6 shows an example of a Huffman table for AC coefficients. The AC coefficients are classified into groups according to their values, and codes corresponding to the zero run lengths are assigned to the respective groups, using the table in Fig. 6. If, for example, an AC coefficient is -2, the coefficient is classified as a coefficient belonging to group 2. If the corresponding zero run length is 0, the code "01" is assigned to the group. Note that if an added bit for discriminating the AC coefficient from the remaining coefficients in the group is "01", this AC coefficient is represented by "0101".

[Format of JPEG Data]

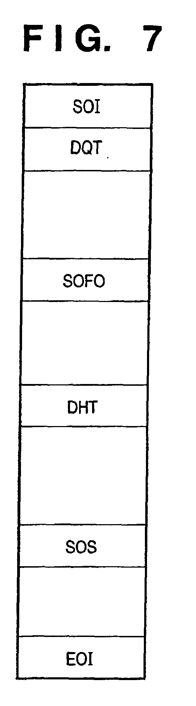

Fig. 7 shows JPEG data, and more specifically, the format of the data compressed by the JPEG sequential scheme. According to the sequential scheme, in decoding operation, the original image is sequentially reconstructed from the upper side of the image. In contrast to this, a scheme of displaying unclear images as a whole at first and then gradually displaying clearer images is called the progressive scheme. These different schemes are selectively used depending on the Huffman coding method in the entropy coder 703 in Fig. 1A.

JPEG data is formatted by using 2-byte codes called markers which are unique in the data. The first SOI (Start of Image) marker represents the start of the JPEG data. The next DQT (Define Quantization Table) marker fields defines a quantizing table. The quantizing table used in compression is stored after the DQT marker.

The next SOFO (Start Of Frame 0) marker field is used for JPEG data compressed by the sequential scheme using the DCT. Parameters in compression, e. g., the image size of the compressed image, sampling ratio, component count, and the identifier of the quantizing table for each component, are stored next to the SOFO marker.

The next DHT (Define Huffman Table) marker field defines a Huffman table. The Huffman table used in compression is stored behind the DHT marker. The next SOS (Start Of Scan) marker field is used to store the Huffman codes of a coded image. The Huffman codes of an image coded after a header consisting of several bytes and containing information such as the identifier of the Huffman table for each component is added to the image. The last EOI (End of Image) marker indicates the end of the JPEG data.

The order of the markers is not limited to the one shown in Fig. 7. Some JPEG data may include two or more identical markers or marker fields.

[Decoding of JPEG Data]

Fig. 1B is a block diagram showing a decoding process procedure for the JPEG data compressed according to the procedure shown in Fig. 1A.

In decoding the JPEG data, an entropy decoder 704 decodes the Huffman codes into a quantized DCT coefficient block group by using the Huffman table in the JPEG data. An inverse quantizer 705 inversely quantizes the quantized DCT coefficient block group into a DCT coefficient block group by using the quantizing table in the JPEG data. An image inverse converter 706 then computes the inverse DCT (IDCT) for the DCT coefficient block group to reconstruct a 8 x 8-pixel block, thus reconstructing an image.

Decoded image data can be obtained from JPEG data by this procedure.

[Watermark Embedding Process)

A watermark embedding process will be described next with reference to Fig. 2A. The watermark embedding process described below is implemented by manipulating DCT coefficient blocks. The watermark embedding process is performed by the following procedure.

First of all, an image converter 801 computes the DCT of an input image. A watermark embedding device 802 then selects one or more DCT coefficient blocks (to be referred to as "embedding blocks" hereinafter) in which watermark information is to be embedded from the DCT coefficient block, and embeds one of the bits constituting the watermark information in each of the selected embedding blocks. Note that DCT coefficients in which bits are embedded are randomly selected from coefficients having relatively low frequencies, except for DC coefficients, in the embedding blocks.

The watermark embedding process is completed by quantizing the embedding blocks. The size of a quantization step in this case corresponds to the embedding strength.

The following is an example of embedding the bit "0" or "1" for embedding watermark information (to be referred to as a "embedding bit" hereinafter). A value q is obtained by quantizing $slu_0\ v_0\}$ by:

$$q = \ll s\{u_0\ v_0\}/h \gg h \qquad (1)$$

where $s\{u_0\ v_0\}$ is the value of a DCT coefficient, h is the embedding strength, and «x» is a maximum integer that does not exceed x.

A value c that satisfies equation (2) or (3) is set as a DCT coefficient after the watermark embedding process.

$$\text{If the embedding bit is "0", then } c = q + h/4 \qquad (2)$$

$$\text{If the embedding bit is "1", then } c = q - 3h/4 \qquad (3)$$

Finally, an image inverse converter 803 inversely converts the output from a watermark embedding device 802.

<First Embodiment>

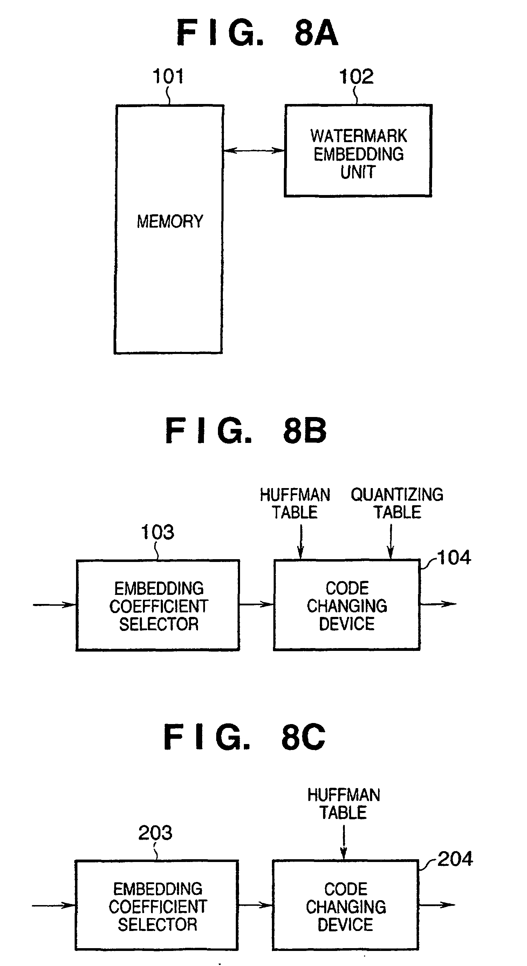

Figs. 8A and 8B are block diagrams showing the arrangement of an image processing apparatus according to the first embodiment of the present invention.

Referring to Fig. 8A, the data input from a memory 101 to a watermark embedding unit 102 is JPEG data having the data format shown in Fig. 7. The watermark embedding unit 102 performs the above watermark embedding process for the input JPEG data. Fig. 8B shows an arrangement for this watermark embedding process.

In the watermark embedding process procedure described above, embedding blocks are selected from a DCT coefficient block group. Referring to Fig. 8B, however, a embedding coefficient selector 103 selects embedding blocks from the Huffman-coded data succeeding the SOS marker in Fig. 7.

The embedding coefficient selector 103 also selects DCT coefficients in which embedding bits are to be embedded from coefficients having relatively low frequencies, except for the DC coefficients, in the embedding blocks. Since the DCT coefficients are arranged in the order determined by the zigzag scanning shown in Fig. 5, this selection has a unique order .

As described above, the watermark embedding process is completed by quantizing the embedding blocks. This indicates that the original values of the DCT coefficients are changed. The original values of the DCT coefficients can be obtained by decoding the coded data by using a Huffman table and a quantizing table. The DCT coefficients changed by the watermark embedding process are coded again by using the Huffman table and quantizing table. The watermark embedding process is therefore implemented by a code changing device 104 for changing input coded data by using the Huffman table behind the DHT marker and quantizing table next to the DQT marker in Fig. 7 as parameters.

If, for example, the coded data corresponding to a selected DCT coefficient is "0101", a quantized value of -2 is obtained by using the Huffman table. If the value of the quantizing table which corresponds to this DCT coefficient is 18, the original value of the DCT coefficient is -36. Assume that the embedding bit "1" is to be embedded in this DCT coefficient. In this case, if the embedding strength is represented by h = 18, c = -49 is obtained from equations (1) and (3). When the DCT coefficient is quantized by using the same quantizing table, a quantized DCT coefficient of -3 is obtained. In addition, the code "01" is obtained by using the same Huffman table. Note that if the added bit for discriminating the AC coefficients in the group is "00", this coefficient is represented by "0100". That is, the code "0101" is rewritten into "0100" to realize watermark embedding. If, however, the code length changes upon watermark embedding, the associated data and the like next to the SOF marker must be rewritten.

As described above, according to the first embodiment, watermark information is embedded in JPEG data by rewriting the JPEG data by using a Huffman table and a quantizing table for partial decoding and re-encoding.

Obviously, the processing in the first embodiment can be applied to various watermark embedding methods of embedding watermark information by manipulating DCT coefficients as well as the above watermark embedding method.

<Second Embodiment>

An image processing apparatus according to the second embodiment of the present invention will be described below. The same reference numerals as in the first embodiment denote the same parts in the second embodiment, and a detailed description thereof will be omitted.

In the first embodiment, watermark information is embedded by manipulating the values of DCT coefficients of embedding blocks. The processing in the first embodiment therefore requires a Huffman table and a quantizing table to reconstruct the DCT coefficients from JPEG data.

In the second embodiment, a method of embedding watermark information by manipulating the values of quantized DCT coefficients of quantized DCT coefficient blocks, i.e., a method of embedding watermark information in JPEG data without using any quantizing table, will be described. According to the second embodiment, since watermark information is embedded in quantized DCT coefficient blocks without reconstructing DCT coefficient blocks from JPEG data, only a Huffman table is required.

In the method of embedding watermark information by manipulating the values of quantized DCT coefficients, if the value of a quantized DCT coefficient is an even number, the embedding bit "0" is embedded, whereas if this value is an odd number, the embedding bit "1" is embedded. If, for example, the embedding bit "1" is to be embedded in the code data "0101", since the value of the quantized DCT coefficient corresponding to the code is the even number -2, this value is changed to the nearest odd number -3. The code "0101" is written into "0100", accordingly. When the embedding bit "0" is to be embedded in the code data "0101", the code data remains unchanged.

A watermark embedding process can also be implemented by a method of embedding bit "0" if the value of a quantized DCT coefficient belongs to an even-numbered group, and embedding the embedding bit "1" if this value belongs to an odd-numbered group. When, for example, the embedding bit "1" is to be embedded in the code data "0101", since the quantized DCT coefficient corresponding to the code belongs to group 2 (even-numbered group), the code is written into a code belonging to group 1 or 3, which is the nearest odd-numbered group. When the embedding bit "0" is to be embedded in the code data "0101", the code data remains unchanged.

In addition, according to the watermark embedding method of the second embodiment, a watermark embedding process using only a Huffman table is implemented by setting the value q or $<<\{u_0 \, v_0\}/h>>$ in equation (1) as the value of a quantized DCT coefficient.

Fig. 8C is a block diagram showing the arrangement of a watermark embedding unit 102 for embedding watermark information in JPEG data by the watermark embedding method using only a Huffman table. Note that data in which watermark information is embedded is JPEG data having, for example, a data format like the one shown in Fig. 7.

As in the first embodiment, a embedding coefficient selector 203 selects code data in which embedding blocks and embedding bits are to be embedded from the Huffman-coded data succeeding the SOS marker in Fig. 7.

A code changing device 204 for implementing the above watermark embedding method directly rewrites the selected coded data by using only the Huffman table next to the DHT marker in Fig. 7, thereby embedding the embedding bits. If, however, the code length changes upon watermark embedding, the associated data and the like behind the SOF marker must be rewritten.

Obviously, the processing in the second embodiment can be applied to various watermark embedding methods of embedding watermark information by operating DCT coefficients as well as the above watermark embedding method.

<Third Embodiment>

An image processing apparatus according to the third embodiment of the present invention will be described below. The same reference numerals as in the first embodiment denote the same parts in the third embodiment, and a detailed description thereof will be omitted.

In the first and second embodiments, the methods of embedding watermark information in coded/compressed data using the discrete cosine transformation, e.g., JPEG data, have been described. In the third embodiment, a discrete cosine transformation device is replaced with various image converters such as a discrete wavelet transformation device, discrete Fourier transformation device, and a predictive coder. Various image converters can be used because entropy-coded data including Huffman codes and data compressed by quantization or the like are decoded up to an intermediate stage by looking up the tables used for the coding and compressing processes essentially without any dependence on image conversion such as the discrete cosine transformation, and watermark information is embedded in the data at the intermediate stage.

The format of compressed data is not limited to that of JPEG data shown in Fig. 7. Watermark information can be embedded in coded/compressed data having any format as long as information indicating the location of the compressed data and the table used for compression can be uniquely specified.

JPEG 2000 for which standardization is currently underway has an arrangement like the one shown in Fig. 1A. In this scheme, a discrete wavelet transformation device is promising as an image converter, and an entropy coding scheme including a Huffman scheme is promising as an coding scheme. Obviously, therefore, for the watermark embedding method of manipulating discrete wavelet coefficients, a watermark embedding apparatus corresponding to JPEG 2000 can be realized by the arrangement of the first and second embodiments shown in Figs. 8A to 8C.

In each embodiment described above, a watermark embedding process is targeted on still image data. As is apparent, however, the targets in these embodiments are not limited to still image data, and the embodiments can be applied to video data.

<Fourth Embodiment>

An image processing apparatus according to the fourth embodiment of the present invention will be described below. The same reference numerals as in the first embodiment denote the same parts in the fourth embodiment, and a detailed description thereof will be omitted.

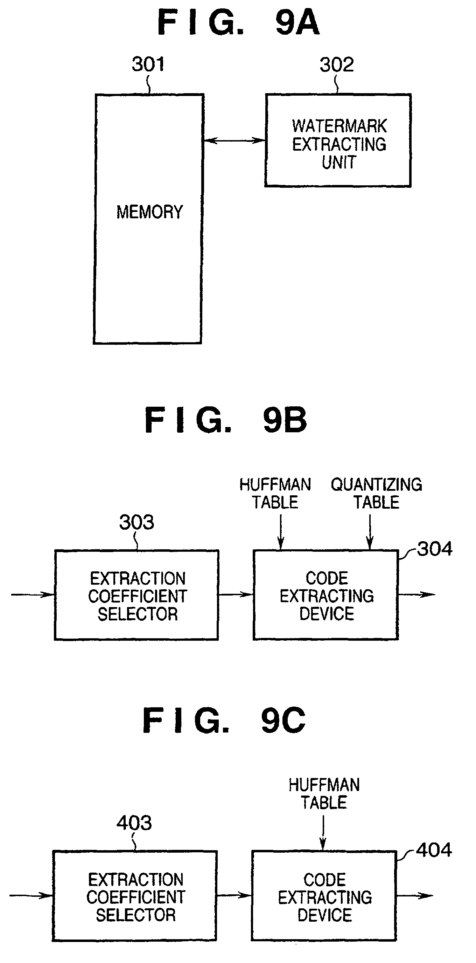

In the fourth embodiment, a method of extracting watermark information from compressed data in which the watermark information is embedded will be described. Figs. 9A to 9C are block diagrams each showing the arrangement of an image processing apparatus according to the fourth embodiment.

The process of extracting watermark information embedded in data by the method of the first embodiment will be described first.

Referring to Fig. 9A, the data input from a memory 301 to a watermark extracting unit 302 is JPEG data having, for example, a data format like the one shown in Fig. 7. The watermark extracting unit 302 extracts watermark information from the input JPEG data. Fig. 9B shows an arrangement for this watermark extracting process.

First of all, each extraction block from which watermark information is to be extracted is selected by an extraction coefficient selector 303 designed to perform processing similar to that performed by the embedding coefficient selector 103 in Fig. 8B.

When watermark information is to be extracted from the selected extraction block, a code extracting device 304 transforms the JPEG data of the extraction block into a DCT coefficient by using a Huffman table and quantizing table, and determines whether the value corresponds to "1" or "0". For example, the code data "0100" is decoded into the quantized DCT coefficient -3, and the corresponding value in the quantizing table is decoded into the DCT coefficient -54. In addition, the embedding bit "1" indicating watermark information is extracted from the decoded DCT coefficient according to equations (1) and (3).

The method of extracting embedded watermark information according to the second embodiment will be described next with reference to Fig. 9C.

First of all, each extraction block from which watermark information is to be extracted is selected by an extraction coefficient selector 403 designed to perform processing similar to that performed by the embedding coefficient selector 203 in Fig. 8C. A code extracting device 404 then determines whether the watermark information embedded in a quantized DCT coefficient of the extraction block is "1" or "0". For example, since it is found out from a Huffman table that the value of the quantized DCT coefficient corresponding to the code data "0100" is an odd number, "1" is extracted as watermark information.

In this manner, watermark information is directly extracted from JPEG data by using a quantizing table and/or Huffman table.

Obviously, the watermark information extracting process in the fourth embodiment corresponds to the watermark embedding process using various image converters in the third embodiment as well as the watermark embedding process using the discrete cosine transformation shown in the first and second embodiments.

The image processing apparatus according to each of the above embodiments can be applied to image input apparatuses such as digital still cameras and digital video cameras (to be collectively called "digital cameras" hereinafter). Assume that the image compressing process in this image input apparatus is provided as hardware. Even in this case, if a watermark embedding process can be easily implemented by supplying a program to the CPU without adding any new hardware. In addition, a watermark embedding process need not always be performed in real time unlike a data compressing process, and hence can be executed while data is transferred from an image input apparatus such as a digital camera to a personal computer or the image input apparatus executes no image input process. This makes it possible to embed watermark information within a short period of time even if the performance of the CPU mounted in the image input apparatus is low.

As is also obvious, the image processing apparatus according to each of the above embodiments can be applied to an image input/output apparatus such as a color facsimile apparatus. In this case, the watermark information embedded by the image input apparatus is extracted by the image output apparatus in which the watermark extracting function described in the fourth embodiment is installed. If regulation information (restriction information about an output resolution and output size/number of output colors) about an image output is indicated by the embedded watermark information, the image output apparatus can be controlled in accordance with the regulation information.

Obviously, the embodiments described above can be applied to various systems such as a still image transfer system having a compression application such as JPEG and still image processing system.

As has been described above, according to the embodiments described above, watermark information can be embedded in compressed data and embedded watermark information can be extracted by adding a simple processing means to an image processing apparatus having an image compressing function.

Embodiments may comprise a system constituted by a plurality of devices (e.g., a host computer, interface, reader, printer, etc.) or an apparatus comprising a single device (e.g., a copier or facsimile machine, etc.).

Furthermore, embodiments may be attained by supplying a storage medium storing the program codes of the software for performing the functions of the foregoing embodiment to a system or an apparatus, reading the program codes with a computer (e.g., a CPU or MPU) of the system or apparatus from the storage medium, and then executing the program codes.

In this case, the program codes read from the storage medium implement the novel functions of the embodiments, and the storage medium storing the program codes constitutes an embodiment itself.

Further, the storage medium, such as a floppy disk, hard disk, optical disk, magneto-optical disk, CD-ROM, CD-R, magnetic tape, non-volatile type memory card or ROM can be used to provide the program codes.

Furthermore, besides the case where the aforesaid functions according to the embodiment are implemented by executing the program codes read by a computer, it goes without saying that an embodiment may comprise an operating system or the like running on a computer performing a part of or the entire process in accordance with the designation of program codes and implementing the functions according to the embodiments.

Embodiments cover a case where, after the program codes read from the storage medium are written in a function expansion board inserted into the computer or in a memory provided in a function expansion unit connected to the computer, a CPU or the like contained in the function expansion board or function expansion unit performs a part of or the entire process in accordance with the designation of program codes and implements the function of the above embodiment.

**Claims**

1. Apparatus for embedding digital watermark data in encoded image data comprising image data which has been divided into blocks of pixels, converted into DC and AC frequency components for each block and encoded by encoding the frequency components using a coding table, the apparatus comprising:

   selecting means (103, 203) operable to select a subset of the AC frequency components of each of a plurality of blocks;
   de-coding means (104, 204) operable to decode the encoded image data for the selected frequency components by using the coding table to generate partially decoded data comprising frequency component data;
   embedding means (104, 204) operable to embed digital watermark data in the data of the selected subsets of AC frequency components; and
   encoding means (104, 204) operable to re-encode the frequency component data with the digital watermark data embedded therein using the coding table.

2. Apparatus according to claim 1, wherein the selecting means (103, 203) is operable to select each subset of the AC frequency components in each block into which the digital watermark data is to be embedded such that each subset comprises AC components having relatively low frequencies within the block.

3. Apparatus according to claim 1 or claim 2, wherein:

   the decoding means (104) is operable to decode the encoded image data by using the coding table to generate partially decoded data comprising quantised frequency component data and is further operable to decode the quantised frequency component data using a quantisation table to generate non-quantised frequency component data;
   the embedding means (104) is operable to embed the digital watermark data in the non-quantised frequency component data; and
   the encoding means (104) is operable to re-encode the frequency component data with the digital watermark data embedded therein by using the quantisation table to generate quantised frequency component data and using the coding table to encode the quantised frequency component data.

4. Apparatus according to claim 1 or claim 2, wherein:

   the decoding means (204) is operable to decode the encoded image data by using the coding table to generate partially decoded data comprising quantised frequency component data;
   the embedding means (204) is operable to embed the digital watermark data in the quantised frequency component data; and
   the encoding means (204) is operable to re-encode the quantised frequency component data with the digital watermark data embedded therein using the coding table.

5. Apparatus according to any preceding claim, wherein the decoding means (104, 204) and encoding means (104, 204) are operable to perform processing using a coding table comprising a Huffman coding table.

6. Apparatus according to claim 1 or claim 2, wherein the coding table comprises a quantisation table and wherein:

   the decoding means (104) is operable to decode the encoded image data by using the quantisation table to inversely quantise the encoded image data to generate partially decoded data comprising non-quantised frequency component data;

the embedding means (104) is operable to embed the digital watermark data in the non-quantised frequency component data; and

the encoding means (104) is operable to re-encode the frequency component data with the digital watermark data embedded therein by using the quantisation table to generate quantised frequency component data.

7. Apparatus for extracting digital watermark data from encoded image data generated using an apparatus according to any preceding claim, comprising:

selecting means (303, 403) operable to select the subset of AC frequency components of each of the plurality of blocks in which the digital watermark data is embedded;

de-coding means (304, 404) operable to decode the encoded image data for the selected frequency components by using the coding table to generate partially decoded data comprising the frequency component data; and

extracting means (304, 404) operable to extract the digital watermark data from the selected subsets of AC frequency components.

8. A method of embedding digital watermark data in encoded image data comprising image data which has been divided into blocks of pixels, converted into DC and AC frequency components for each block and encoded by encoding the frequency components using a coding table, the method comprising:

selecting a subset of the AC frequency components of each of a plurality of blocks;

de-coding the encoded image data for the selected frequency components by using the coding table to generate partially decoded data comprising frequency component data;

embedding digital watermark data in the data of the selected subsets of AC frequency components; and

re-encoding the frequency component data with the digital watermark data embedded therein using the coding table.

9. A method according to claim 8, wherein the selecting step comprises selecting each subset of the AC frequency components in each block into which the digital watermark data is to be embedded such that each subset comprises AC components having relatively low frequencies within the block.

10. A method according to claim 8 or claim 9, wherein:

the decoding step comprises decoding the encoded image data by using the coding table to generate partially decoded data comprising quantised frequency component data and decoding the quantised frequency component data using a quantisation table to generate non-quantised frequency component data;

the embedding step comprises embedding the digital watermark data in the non-quantised frequency component data; and

the re-encoding step comprises re-encoding the frequency component data with the digital watermark data embedded therein by using the quantisation table to generate quantised frequency component data and using the ceding table to encode the quantised frequency component data.

11. A method according to claim 8 or claim 9, wherein:

the decoding step comprises decoding the encoded image data by using the coding table to generate partially decoded data comprising quantised frequency component data;

the embedding step comprises embedding the digital watermark data in the quantised frequency component data; and

the re-encoding step comprises re-encoding the quantised frequency component data with the digital watermark data embedded therein using the coding table.

12. A method according to any of claims 8 to 11, wherein processing using a coding table comprising a Huffman coding table is performed in the de-coding step and the re-encoding step.

13. A method according to claim 8 or claim 9, wherein the coding table comprises a quantisation table and wherein:

the decoding step comprises decoding the encoded image data by using the quantisation table to inversely quantise the encoded image data to generate partially decoded data comprising non-quantised frequency component data;

the embedding step comprises embedding the digital watermark data in the non-quantised frequency component data; and

the re-encoding step comprises re-encoding the frequency component data with the digital watermark data embedded therein by using the quantisation table to generate quantised frequency component data.

14. A method of extracting digital watermark data from encoded image data generated using a method according to any of claims 8 to 13, comprising:

selecting the subset of AC frequency components of each of the plurality of blocks in which the digital watermark data is embedded;

de-coding the encoded image data for the selected frequency components by using the coding table to generate partially decoded data comprising the frequency component data; and

extracting the digital watermark data from the selected subsets of AC frequency components.

15. A storage medium storing a computer program for programming a programmable processing apparatus to become operable to perform a method as set out in at least one of claims 8 to 13.

16. A signal carrying a computer program for programming a programmable processing apparatus to become operable to perform a method as set out in at least one of claims 8 to 13.

17. A storage medium storing a computer program for programming a programmable processing apparatus to become operable to perform a method as set out in claim 14.

18. A signal carrying a computer program for programming a programmable processing apparatus to become operable to perform a method as set out in claim 14.

**Patentansprüche**

1. Vorrichtung zur Einbettung von Digitalwasserzeichendaten in codierte Bilddaten mit Bilddaten, die in Blöcke von Bildelementen aufgeteilt, in DC- und AC-Frequenzkomponenten für jeden Block gewandelt und durch ein Codieren der Frequenzkomponenten unter Verwendung einer Codierungstabelle codiert worden sind, mit:

einer Auswahleinrichtung (103, 203), die zum Auswählen eines Untersatzes der AC-Frequenzkomponenten jedes Blocks einer Vielzahl von Blöcken betreibbar ist;

einer Decodierungseinrichtung (104, 204), die zum Decodieren der codierten Bilddaten für die ausgewählten Frequenzkomponenten unter Verwendung der Codierungstabelle zum Erzeugen teilweise decodierter Daten mit Frequenzkomponentendaten betreibbar ist;

einer Einbettungseinrichtung (104, 204), die zum Einbetten von Digitalwasserzeichendaten in die Daten der ausgewählten Untersätze von AC-Frequenzkomponenten betreibbar ist; und

einer Codierungseinrichtung (104, 204), die zum Neucodieren der Frequenzkomponentendaten mit den darin eingebetteten Digitalwasserzeichendaten unter Verwendung der Codierungstabelle betreibbar ist.

2. Vorrichtung nach Anspruch 1, wobei die Auswahleinrichtung (103, 203) zum derartigen Auswählen jedes Untersatzes der AC-Frequenzkomponenten in jedem Block, in den die Digitalwasserzeichendaten einzubetten sind, daß jeder Untersatz AC-Komponenten mit relativ niedrigen Frequenzen in dem Block umfaßt, betreibbar ist.

3. Vorrichtung nach Anspruch 1 oder Anspruch 2, wobei:

die Decodierungseinrichtung (104) zum Decodieren der codierten Bilddaten unter Verwendung der Codierungstabelle zum Erzeugen teilweise decodierter Daten mit quantisierten Frequenzkomponentendaten betreibbar ist und zudem zum Decodieren der quantisierten Frequenzkomponentendaten unter Verwendung einer Quantisierungstabelle zum Erzeugen nicht quantisierter Frequenzkomponentendaten betreibbar ist;

die Einbettungseinrichtung (104) zum Einbetten der Digitalwasserzeichendaten in die nicht quantisierten Frequenzkomponentendaten betreibbar ist; und

die Codierungseinrichtung (104) zum Neucodieren der Frequenzkomponentendaten mit den darin eingebetteten Digitalwasserzeichendaten unter Verwendung der Quantisierungstabelle zum Erzeugen quantisierter Frequenzkomponentendaten und unter Verwendung der Codierungstabelle zum Codieren der quantisierten Frequenzkomponentendaten betreibbar ist.

4. Vorrichtung nach Anspruch 1 oder Anspruch 2, wobei:

die Decodierungseinrichtung (204) zum Decodieren der codierten Bilddaten unter Verwendung der Codierungstabelle zum Erzeugen teilweise decodierter Daten mit quantisierten Frequenzkomponentendaten betreibbar ist;

die Einbettungseinrichtung (204) zum Einbetten der Digitalwasserzeichendaten in die quantisierten Frequenzkomponentendaten betreibbar ist; und

die Codierungseinrichtung (204) zum Neucodieren der quantisierten Frequenzkomponentendaten mit den darin eingebetteten Digitalwasserzeichendaten unter Verwendung der Codierungstabelle betreibbar ist.

5. Vorrichtung nach einem der vorstehenden Ansprüche, wobei die Decodierungseinrichtung (104, 204) und die Codierungseinrichtung (104, 204) zum Ausführen einer Verarbeitung unter Verwendung einer Codierungstabelle mit einer Huffman-Codierungstabelle betreibbar sind.

6. Vorrichtung nach Anspruch 1 oder Anspruch 2, wobei die Codierungstabelle eine Quantisierungstabelle umfaßt und wobei:

> die Decodierungseinrichtung (104) zum Decodieren der codierten Bilddaten unter Verwendung der Quantisierungstabelle zum inversen Quantisieren der codierten Bilddaten zum Erzeugen teilweise decodierter Daten mit nicht quantisierten Frequenzkomponentendaten betreibbar ist;
> die Einbettungseinrichtung (104) zum Einbetten der Digitalwasserzeichendaten in die nicht quantisierten Frequenzkomponentendaten betreibbar ist; und
> die Codierungseinrichtung (104) zum Neucodieren der Frequenzkomponentendaten mit den darin eingebetteten Digitalwasserzeichendaten unter Verwendung der Quantisierungstabelle zum Erzeugen quantisierter Frequenzkomponentendaten betreibbar ist.

7. Vorrichtung zur Extraktion von Digitalwasserzeichendaten aus unter Verwendung einer Vorrichtung nach einem der vorstehenden Ansprüche erzeugten codierten Bilddaten, mit:

> einer Auswahleinrichtung (303, 403), die zum Auswählen des Untersatzes von AC-Frequenzkomponenten jedes Blocks der Vielzahl von Blöcken, in den die Digitalwasserzeichendaten eingebettet sind, betreibbar ist;
> einer Decodierungseinrichtung (304, 404), die zum Decodieren der codierten Bilddaten für die ausgewählten Frequenzkomponenten unter Verwendung der Codierungstabelle zum Erzeugen teilweise decodierter Daten mit den Frequenzkomponentendaten betreibbar ist; und
> einer Extraktionseinrichtung (304, 404), die zum Extrahieren der Digitalwasserzeichendaten aus den ausgewählten Untersätzen von AC~Frequenzkomponenten betreibbar ist.

8. Verfahren zur Einbettung von Digitalwasserzeichendaten in codierte Bilddaten mit Bilddaten, die in Blöcke von Bildelementen aufgeteilt, in DC- und AC-Frequenzkomponenten für jeden Block gewandelt und durch ein Codieren der Frequenzkomponenten unter Verwendung einer Codierungstabelle codiert worden sind, mit:

> Auswählen eines Untersatzes der AC-Frequenzkomponenten jedes Blocks einer Vielzahl von Blöcken;
> Decodieren der codierten Bilddaten für die ausgewählten Frequenzkomponenten unter Verwendung der Codierungstabelle zum Erzeugen teilweise decodierter Daten mit Frequenzkomponentendaten;
> Einbetten von Digitalwasserzeichendaten in die Daten der ausgewählten Untersätze von AC-Frequenzkomponenten; und
> Neucodieren der Frequenzkomponentendaten mit den darin eingebetteten Digitalwasserzeichendaten unter Verwendung der Codierungstabelle.

9. Verfahren nach Anspruch 8, wobei der Auswahlschritt ein derartiges Auswählen jedes Untersatzes der AC-Frequenzkomponenten in jedem Block, in den die Digitalwasserzeichendaten einzubetten sind, daß jeder Untersatz AC-Komponenten mit relativ niedrigen Frequenzen in dem Block umfaßt, umfaßt..

10. Verfahren nach Anspruch 8 oder Anspruch 9, wobei:

> der Decodierungsschritt ein Decodieren der codierten Bilddaten unter Verwendung der Codierungstabelle zum Erzeugen teilweise decodierter Daten mit quantisierten Frequenzkomponentendaten und ein Decodieren der quantisierten Frequenzkomponentendaten unter Verwendung einer Quantisierungstabelle zum Erzeugen nicht quantisierter Frequenzkomponentendaten umfaßt;
> der Einbettungsschritt ein Einbetten der Digitalwasserzeichendaten in die nicht quantisierten Frequenzkomponentendaten umfaßt; und
> der Neucodierungsschritt ein Neucodieren der Frequenzkomponentendaten mit den darin eingebetteten Digitalwasserzeichendaten unter Verwendung der Quantisierungstabelle zum Erzeugen quantisierter Frequenzkomponentendaten und unter Verwendung der Codierungstabelle zum Codieren der quantisierten Frequenzkomponentendaten umfaßt.

11. Verfahren nach Anspruch 8 oder Anspruch 9, wobei:

> der Decodierungsschritt ein Decodieren der codierten Bilddaten unter Verwendung der Codierungstabelle zum Erzeugen teilweise decodierter Daten mit quantisierten Frequenzkomponentendaten umfaßt;
> der Einbettungsschritt ein Einbetten der Digitalwasserzeichendaten in die quantisierten Frequenzkomponentendaten umfaßt; und

der Neucodierungsschritt ein Neucodieren der quantisierten Frequenzkomponentendaten mit den darin eingebetteten Digitalwasserzeichendaten unter Verwendung der Codierungstabelle umfaßt.

12. Verfahren nach einem der Ansprüche 8 bis 11, wobei in dem Decodierungsschritt und dem Neucodierungsschritt eine Verarbeitung unter Verwendung einer Codierungstabelle mit einer Huffman-Codierungstabelle ausgeführt wird.

13. Verfahren nach Anspruch 8 oder Anspruch 9, wobei die Codierungstabelle eine Quantisierungstabelle umfaßt und wobei:

der Decodierungsschritt ein Decodieren der codierten Bilddaten unter Verwendung der Quantisierungstabelle zum inversen Quantisieren der codierten Bilddaten zum Erzeugen teilweise decodierter Daten mit nicht quantisierten Frequenzkomponentendaten umfaßt; der Einbettungsschritt ein Einbetten der Digitalwasserzeichendaten in die nicht quantisierten Frequenzkomponentendaten umfaßt; und der Neucodierungsschritt ein Neucodieren der Frequenzkomponentendaten mit den darin eingebetteten Digitalwasserzeichendaten unter Verwendung der Quantisierungstabelle zum Erzeugen quantisierter Frequenzkomponentendaten umfaßt.

14. Verfahren zur Extraktion von Digitalwasserzeichendaten aus unter Verwendung eines Verfahrens nach einem der Ansprüche 8 bis 13 erzeugten codierten Bilddaten, mit:

Auswählen des Untersatzes von AC-Frequenzkompononten jedes Blocks der Vielzahl von Blöcken, in den die Digitalwasserzeichendaten eingebettet sind; Decodieren der codierten Bilddaten für die ausgewählten Frequenzkomponenten unter Verwendung der Codierungstabelle zum Erzeugen teilweise decodierter Daten mit den Frequenzkomponentendaten; und Extrahieren der Digitalwasserzeichendaten aus den ausgewählten Untersätzen von AC-Frequenzkomponenten.

15. Speicherträger, der ein Computerprogramm zur Programmierung einer programmierbaren Verarbeitungsvorrichtung derart, daß sie zum Ausführen eines Verfahrens wie in zumindest einem der Ansprüche 8 bis 13 definiert betreibbar wird, speichert.

16. Signal, das ein Computerprogramm zur Programmierung einer programmierbaren Verarbeitungsvorrichtung derart, daß sie zum Ausführen eines Verfahrens wie in zumindest einem der Ansprüche 8 bis 13 definiert betreibbar wird, trägt.

17. Speicherträger, der ein Computerprogramm zur Programmierung einer programmierbaren Verarbeitungsvorrichtung derart, daß sie zum Ausführen eines Verfahrens wie in Anspruch 14 definiert betreibbar wird, speichert.

18. Signal, das ein Computerprogramm zur Programmierung einer programmierbaren Verarbeitungsvorrichtung derart, daß sie zum Ausführen eines Verfahrens wie in Anspruch 14 definiert betreibbar wird, trägt.

## Revendications

1. Appareil pour intégrer des données numériques de filigrane dans des données d'image codées comprenant des données d'image qui ont été divisées en blocs de pixels, converties en composantes de fréquence en courant continu et en courant alternatif pour chaque bloc et codées par codage des composantes de fréquence en utilisant une table de codage, l'appareil comprenant :

un moyen (103, 203) de sélection pouvant fonctionner pour sélectionner un sous-ensemble des composantes de fréquence en courant alternatif de chacun d'une pluralité de blocs ; un moyen (104, 204) de décodage pouvant fonctionner pour décoder les données d'image codées pour les composantes de fréquence sélectionnées en utilisant la table de codage pour générer des données partiellement décodées comprenant des données de composante de fréquence ; un moyen (104, 204) d'intégration pouvant fonctionner pour intégrer des données numériques de filigrane dans les données des sous-ensembles sélectionnés de composantes de fréquence en courant alternatif ; et un moyen (104, 204) de codage pouvant fonctionner pour recoder les données de composante de fréquence dans lesquelles sont intégrées les données numériques de filigrane en utilisant la table de codage.

2. Appareil selon la revendication 1, dans lequel le moyen (103, 203) de sélection peut fonctionner pour sélectionner chaque sous-ensemble des composantes de fréquence en courant alternatif dans chaque bloc dans lesquels sont intégrées les données numériques de filigrane, de telle sorte que chaque sous-ensemble comprend des composantes en courant alternatif ayant des fréquences relativement basses à l'intérieur du bloc.

3. Appareil selon la revendication 1 ou la revendication 2, dans lequel :

le moyen (104) de décodage peut fonctionner pour décoder les données d'image codées en utilisant la table de codage pour générer des données partiellement décodées comprenant des données quantifiées de composante de fréquence, et peut en outre fonctionner pour décoder les données quantifiées de composante de fréquence en utilisant une table de quantification pour générer des données non quantifiées de composante de fréquence ; le moyen (104) d'intégration peut fonctionner pour intégrer les données numériques de filigrane dans les données non quantifiées de composante de fréquence ; et le moyen (104) de codage peut fonctionner pour recoder les données de composante de fréquence dans lesquelles sont intégrées les données numériques de filigrane en utilisant la table de quantification pour générer des données quantifiées de composante de fréquence et en utilisant la table de codage pour coder les données quantifiées de composante de fréquence.

4. Appareil selon la revendication 1 ou la revendication 2, dans lequel :

le moyen (204) de décodage peut fonctionner pour décoder les données d'image codées en utilisant la table de codage pour générer des données partiellement décodées comprenant des données quantifiées de composante de fréquence ; le moyen (204) d'intégration peut fonctionner pour intégrer les données numériques de filigrane dans les données quantifiées de composante de fréquence ; et le moyen (204) de codage peut fonctionner pour recoder les données quantifiées de composante de fréquence dans lesquelles sont intégrées les données numériques de filigrane en utilisant la table de codage.

5. Appareil selon l'une quelconque des revendications précédentes, dans lequel le moyen (104, 204) de décodage et le moyen (104, 204) de codage peuvent fonctionner pour effectuer un traitement en utilisant une table de codage comprenant une table de codage de Huffman.

6. Appareil selon la revendication 1 ou la revendication 2, dans lequel la table de codage comprend une table de quantification et dans lequel :

le moyen (104) de décodage peut fonctionner pour décoder les données d'image codées en utilisant la table de quantification pour quantifier de manière inverse les données d'image codées pour générer des données partiellement décodées comprenant des données non quantifiées de composante de fréquence ; le moyen (104) d'intégration peut fonctionner pour intégrer les données numériques de filigrane dans les données non quantifiées de composante de fréquence ; et le moyen (104) de codage peut fonctionner pour recoder les données de composante de fréquence dans lesquelles sont intégrées les données numériques de filigrane en utilisant la table de quantification pour générer des données quantifiées de composante de fréquence.

7. Appareil pour extraire des données numériques de filigrane à partir de données d'image codées, générées en utilisant un appareil selon l'une quelconque des revendications précédentes, comprenant :

un moyen (303, 403) de sélection pouvant fonctionner pour sélectionner le sous-ensemble de composantes de fréquence en courant alternatif de chacun de la pluralité de blocs dans lesquels sont intégrées les données numériques de filigrane ; un moyen (304, 404) de décodage pouvant fonctionner pour décoder les données d'image codées pour les composantes de fréquence sélectionnées en utilisant la table de codage pour générer des données partiellement décodées comprenant les données de composante de fréquence ; et un moyen (304, 404) d'extraction pouvant fonctionner pour extraire les données numériques de filigrane à partir des sous-ensembles sélectionnés de composantes de fréquence en courant alternatif.

8. Procédé d'intégration de données numériques de filigrane dans des données d'image codées comprenant des données d'image qui ont été divisées en blocs de pixels, converties en composantes de fréquence en courant continu et en courant alternatif pour chaque bloc et codées par codage des composantes de fréquence en utilisant une table de codage, le procédé comprenant :

la sélection d'un sous-ensemble des composantes de fréquence en courant alternatif de chacun d'une pluralité de blocs ; le décodage des données d'image codées pour les composantes de fréquence sélectionnées en utilisant la table de codage pour générer des données partiellement décodées comprenant des données de composante de fréquence ;
l'intégration de données numériques de filigrane dans les données des sous-ensembles sélectionnés de composantes de fréquence en courant alternatif ; et
le recodage des données de composante de fréquence dans lesquelles sont intégrées les données numériques de filigrane en utilisant la table de codage.

9. Procédé selon la revendication 8, dans lequel l'étape de sélection comprend la sélection de chaque sous-ensemble des composantes de fréquence en courant alternatif dans chaque bloc dans lequel les données numériques de filigrane doivent être intégrées, de telle sorte que chaque sous-ensemble comprend des composantes en courant alternatif ayant des fréquences relativement basses à l'intérieur du bloc.

10. Procédé selon la revendication 8 ou la revendication 9, dans lequel :

l'étape de décodage comprend le décodage des données d'image codées en utilisant la table de codage pour générer des données partiellement décodées comprenant des données quantifiées de composante de fréquence et le décodage des données quantifiées de composante de fréquence en utilisant une table de quantification pour générer des données non quantifiées de composante de fréquence ;
l'étape d'intégration comprend l'intégration des données numériques de filigrane dans les données non quantifiées de composante de fréquence ; et
l'étape de recodage comprend le recodage des données de composante de fréquence dans lesquelles sont intégrées les données numériques de filigrane en utilisant la table de quantification pour générer des données quantifiées de composante de fréquence et en utilisant la table de codage pour coder les données quantifiées de composante de fréquence.

11. Procédé selon la revendication 8 ou la revendication 9, dans lequel :

l'étape de décodage comprend le décodage des données d'image codées en utilisant la table de codage pour générer des données partiellement décodées comprenant des données quantifiées de composante de fréquence ;
l'étape d'intégration comprend l'intégration des données numériques de filigrane dans les données quantifiées de composante de fréquence ; et
l'étape de recodage comprend le recodage des données quantifiées de composante de fréquence dans lesquelles sont intégrées les données numériques de filigrane en utilisant la table de codage.

12. Procédé selon l'une quelconque des revendications 8 à 11, dans lequel un traitement utilisant une table de codage comprenant une table de codage de Huffman, est effectué au cours de l'étape de décodage et de l'étape de recodage.

13. Procédé selon la revendication 8 ou la revendication 9, dans lequel la table de codage comprend une table de quantification et dans lequel :

l'étape de décodage comprend le décodage des données d'image codées en utilisant la table de quantification pour quantifier de manière inverse les données d'image codées pour générer des données partiellement décodées comprenant des données non quantifiées de composante de fréquence ;
l'étape d'intégration comprend l'intégration des données numériques de filigrane dans les données non quantifiées de composante de fréquence ; et
l'étape de recodage comprend le recodage des données de composante de fréquence dans lesquelles sont intégrées les données numériques de filigrane en utilisant la table de quantification pour générer des données quantifiées de composante de fréquence.

14. Procédé d'extraction de données numériques de filigrane à partir de données d'image codées générées en utilisant un procédé selon l'une quelconque des revendications 8 à 13, comprenant :

la sélection du sous-ensemble de composantes de fréquence en courant alternatif de chacun de la pluralité de blocs dans lesquels sont intégrées les données numériques de filigrane ;
le décodage des données d'image codées pour les composantes de fréquence sélectionnées en utilisant la table de codage pour générer des données partiellement décodées comprenant les données de composante de fréquence ; et
l'extraction des données numériques de filigrane à partir des sous-ensembles sélectionnés de composantes de fréquence en courant alternatif.

15. Support de stockage stockant un programme d'ordinateur pour programmer un appareil de traitement programmable afin qu'il puisse fonctionner pour mettre en oeuvre un procédé tel que décrit dans au moins l'une des revendications 8 à 13.

**16.** Signal acheminant un programme d'ordinateur pour programmer un appareil de traitement programmable afin qu'il puisse fonctionner pour mettre en oeuvre un procédé tel que décrit dans au moins l'une des revendications 8 à 13.

**17.** Support de stockage stockant un programme d'ordinateur pour programmer un appareil de traitement programmable afin qu'il puisse être actionné pour mettre en oeuvre un procédé tel que décrit dans la revendication 14.

**18.** Signal acheminant un programme d'ordinateur pour programmer un appareil de traitement programmable afin qu'il puisse fonctionner pour mettre en oeuvre un procédé tel que décrit dans la revendication 14.

# F I G.   1A

701

702

703

x → | IMAGE CONVERTER | → | QUANTIZER | → | ENTROPY CODER | → y

# F I G.   1B

704

705

706

y → | ENTROPY DECODER | → | INVERSE QUANTIZER | → | IMAGE INVERSE CONVERTER | → x'

# F I G. 2A

```
        801                    802                    803
         ⌒                      ⌒                      ⌒
   ┌──────────────┐      ┌──────────────┐      ┌──────────────┐
x  │    IMAGE     │      │  WATERMARK   │      │ IMAGE INVERSE │  y
──→│  CONVERTER   │ ──→  │  EMBEDDING   │ ──→  │  CONVERTER    │ ──→
   │              │      │   DEVICE     │      │              │
   └──────────────┘      └──────────────┘      └──────────────┘
```

# F I G. 2B

```
        804                    805
         ⌒                      ⌒
   ┌──────────────┐      ┌──────────────┐
y  │    IMAGE     │      │  WATERMARK   │
──→│  CONVERTER   │ ──→  │  EXTRACTING  │ ──→
   │              │      │   DEVICE     │
   └──────────────┘      └──────────────┘
```

17

# F I G. 3

901

902
903
904

x → 
**IMAGE CONVERTER** → **QUANTIZER** → **ENTROPY CODER**

907
906
905

**IMAGE INVERSE CONVERTER** ← **INVERSE QUANTIZER** ← **ENTROPY DECODER**

908
909
910

**IMAGE CONVERTER** → **WATERMARK EMBEDDING DEVICE** → **IMAGE INVERSE CONVERTER**

911
912
913

**IMAGE CONVERTER** → **QUANTIZER** → **ENTROPY CODER** → y

# FIG. 4

| | | | | | | | |
|---|---|---|---|---|---|---|---|
| 17 | 18 | 24 | 47 | 66 | 99 | 99 | 99 |
| 18 | 21 | 26 | 66 | 99 | 99 | 99 | 99 |
| 24 | 26 | 56 | 99 | 99 | 99 | 99 | 99 |
| 47 | 66 | 99 | 99 | 99 | 99 | 99 | 99 |
| 66 | 99 | 99 | 99 | 99 | 99 | 99 | 99 |
| 99 | 99 | 99 | 99 | 99 | 99 | 99 | 99 |
| 99 | 99 | 99 | 99 | 99 | 99 | 99 | 99 |
| 99 | 99 | 99 | 99 | 99 | 99 | 99 | 99 |

# F I G. 5

# F I G.  6

| AC COEFFICIENT | GROUP NUMBER | ZERO-RUN LENGTH | | | | | |
|---|---|---|---|---|---|---|---|
| | | 0 | 1 | 2 | ... | 14 | 15 |
| 0 | 0 | EOB | ... | | | | |
| -1,1 | 1 | 00 | ... | | | | |
| -3,-2,2,3 | 2 | 01 | ... | | | | |
| -7..-4,4..7 | 3 | 100 | ... | | | | |
| -15..-8,8..15 | 4 | 1011 | ... | | | | |
| -31..-16,16..31 | 5 | 11010 | ... | | | | |
| -63..-32,32..63 | 6 | : | | | | | |
| -127..-64,64..127 | 7 | : | | | | | |
| -255..-128,128..255 | 8 | : | | | | | |
| DITTO | | | | | | | |

# FIG. 7

| |
|---|
| SOI |
| DQT |
| |
| SOFO |
| |
| DHT |
| |
| SOS |
| |
| EOI |

# F I G. 8A

101

102

MEMORY

WATERMARK
EMBEDDING
UNIT

# F I G. 8B

HUFFMAN
TABLE

QUANTIZING
TABLE

103

EMBEDDING
COEFFICIENT
SELECTOR

104

CODE
CHANGING
DEVICE

# F I G. 8C

HUFFMAN
TABLE

203

EMBEDDING
COEFFICIENT
SELECTOR

204

CODE
CHANGING
DEVICE

# F I G. 9A

301

302

MEMORY

WATERMARK
EXTRACTING
UNIT

# F I G. 9B

HUFFMAN
TABLE

QUANTIZING
TABLE

303

EXTRACTION
COEFFICIENT
SELECTOR

304

CODE
EXTRACTING
DEVICE

# F I G. 9C

HUFFMAN
TABLE

403

EXTRACTION
COEFFICIENT
SELECTOR

404

CODE
EXTRACTING
DEVICE